# EUROPÄISCHE PATENTSCHRIFT

(11) **EP 0 496 122 B1**
(45) Veröffentlichungstag und Bekanntmachung des Hinweises auf die Patenterteilung: **21.06.1995**
(21) Anmeldenummer: 91122364.2
(22) Anmeldetag: 30.12.1991
(51) Int. Cl.: C09D 175/04, C08K 5/523, C08K 3/32, C08G 18/44, C09D 5/08

(54) **Polyurethanbeschichtungsmassen**
Polyurethane coating compositions
Compositions de revêtement de polyuréthanes

(30) Priorität: 09.01.1991 DE 4100383
(43) Veröffentlichungstag der Anmeldung: 29.07.1992
(73) Patentinhaber: Rhein Chemie Rheinau GmbH, 68219 Mannheim (DE)
(72) Erfinder: Schnepf, Wilhelm, Dipl.-Ing., W-6701 Otterstadt (DE); Schuster, Peter, W-6800 Mannheim (DE)
(74) Vertreter: Gremm, Joachim, Dr.

(56) Entgegenhaltungen:
- DE-A- 3 835 832
- GB-A- 1 133 957

## Beschreibung

Gegenstand der Erfindung ist eine härtbare Polyurethanbeschichtungsmasse die auf korrodierten Metalloberflächen, insbesondere auf verrostetem Eisen haftet und gleichzeitig das Metalloxid (Rost) wieder in das Metall (Eisen) zurückverwandelt.

Die erfindungsgemäße härtbare Beschichtungsmasse basiert auf einem NCO-Präpolymer und einem Härter (Kettenverlängerungsmittel). Sie kann die für solche Massen üblichen Zusätze wie Metalloxide, Füllstoffe, Pigmente, Flammschutzmittel enthalten. Beispiele hierfür sind Eisenoxid, Chromoxid, Aluminiumhydroxid, Bariumsulfat. Wesentlich ist ein Gehalt der Masse an einem Ammoniumpolyphosphat und gleichzeitig einem aromatischen Triphosphat.

Bevorzugt benutzt man als NCO-Präpolymer ein solches aus einem aliphatischen Polycarbonat und Isophorondiisocyanat.

Als Härter oder Kettenverlängerungsmittel verwendet man vorteilhaft ebenfalls ein bevorzugt verkapptes Diamin.

Geeignete Ammoniumpolyphosphate haben einen Polymerisationsgrad von 50 bis 1000, bevorzugt um 700 und als aromatische Triphosphate sind bevorzugt Diphenylkresylphosphat

Die erfindungsgemäßen Beschichtungsmassen haben bevorzugt etwa folgende Zusammensetzung:
Isocyanatpräpolymer 10 bis 30 %, insbesondere 20 Gew.-% Härter 3 bis 12 Gew.-%, insbesondere 5 Gew.-%
Pigmente
Füllstoffe
Metalloxid
Ammoniumpolyphosphat
aromatisches Triphosphat

Die erfindungsgemäßen Beschichtungsmassen können direkt ohne Vorbehandlung auf korrodierte Metallflächen aufgebracht werden, wobei durch Reaktion mit dem Metalloxid (Rost) eine sehr gute Haftung erzielt wird. Die Massen eignen sich für eine Erstbeschichtung, also einen Grundanstrich, aber auch als Pflege bzw. Sanierungsanstrich. Es ist möglich, sie mit anderen Beschichtungsmitteln zu überstreichen. Eine bevorzugte Anwendung ist im Korrosionsschutz für Industrieanlagen, Schiffe und Fahrzeuge.

### Beispiel 1

### Herstellung einer Beschichtungsmasse

20 Gew.-Teile IPDI/Polycarbonat Prepolymer werden mit 15 Gew.-Teilen Diphenylkresylphosphat und 5 Gew.-Teilen eines Gemisches aus rheologischem Additiv, Antioxidans, UV-Absorber und Katalysator versetzt und gemischt.

Zu dieser Mischung werden nacheinander ca. 10 Gew.-Teile Ammoniumpolyphosphat, 6 Gew.-Teile Aluminiumhydroxid und 14 Gew.-Teile Paste und 6 Gew.-Teile anorganische Füllstoffe gegeben und homogenisiert.

Nach Erreichen einer Teilchengröße <15 »m wird mit 20 Gew.-Teilen aromatischem Lösemittel (z.B. Xylol) verdünnt und danach der Härter (4 Gew.-Teile) zugesetzt, homogenisiert und sofort luftdicht verschlossen Es entsteht eine Beschichtungsmasse mit ca. 1.000 - 3.000 mPa.s Viskosität bei 20°C.

Das Produkt ist sofort gebrauchsfähig.

### Beispiel 2

### Anwendung der Beschichtungsmasse

Vor dem Aufbringen der Beschichtungsmasse muß die Oberfläche von losen Bestandteilen und Verunreinigung, z.B. Fette usw., gereinigt werden. Die Korrosionsschicht muß nicht entfernt werden. Der Auftrag der Beschichtungsmasse kann manuell sowie maschinell (airless) erfolgen. Der so aufgebrachte Rostschutzprimer kann je nach Anforderungsprofil mit den unterschiedlichsten Materialien überschichtet werden.

## Patentansprüche

1. Härtbare Polyurethanbeschichtungsmassen enthaltend ein NCO-Präpolymer aus einem aliphatischen Polycarbonat und Isophorondiisocyanat, einen Härter sowie gleichzeitig Ammoniumpolyphosphat und ein aromatisches Triphosphat.

## Claims

1. Curable polyurethane coating compositions containing an NCO prepolymer of an aliphatic polycarbonate and isophorone diisocyanate, a curing agent and, at the same time, ammonium polyphosphate and an aromatic triphosphate.

## Revendications

1. Masses de revêtement de polyuréthane durcissables contenant un prépolymère de NCO d'un polycarbonate aliphatique et d'un diisocyanate d'isophorone, un durcisseur, ainsi que simultanément un polyphosphate d'ammonium et un triphosphate aromatique.
